Europäisches Patentamt

European Patent Office

Office européen des brevets

(19)

(11) Veröffentlichungsnummer: **0 040 371**
**B1**

(12) **EUROPÄISCHE PATENTSCHRIFT**

(45) Veröffentlichungstag der Patentschrift:
**15.02.84**

(51) Int. Cl.³: **B 29 D 27/02**, B 29 B 5/04

(21) Anmeldenummer: 81103503.9

(22) Anmeldetag: **08.05.81**

(54) **Einspritzdüse für Mischköpfe zur Herstellung von Schaumstoff oder Massivstoff bildenden Reaktionsgemischen aus mindestens zwei fliessfähigen Komponenten.**

(30) Priorität: **14.05.80  DE 3018381**

(43) Veröffentlichungstag der Anmeldung:
**25.11.81 Patentblatt 81/47**

(45) Bekanntmachung des Hinweises auf die Patenterteilung:
**15.02.84 Patentblatt 84/7**

(84) Benannte Vertragsstaaten:
**BE CH DE FR GB IT LI**

(56) Entgegenhaltungen:
**DE - A - 2 065 057**
**DE - A - 2 364 501**
**DE - A - 2 815 460**
**GB - A - 1 088 782**

(73) Patentinhaber: **BAYER AG, Zentralbereich Patente, Marken und Lizenzen, D-5090 Leverkusen 1, Bayerwerk (DE)**

(72) Erfinder: **Ersfeld, Heinrich, Biesenbach 11, D-5090 Leverkusen 31 (DE)**

ACTORUM AG

Einspritzdüse für Mischköpfe zur Herstellung von Schaumstoff oder Massivstoff bildenden Reaktionsgemischen aus mindestens zwei fliessfähigen Komponenten

Die Erfindung richtet sich auf eine Einspritzdüse für Mischköpfe zur Herstellung von Schaumstoff oder Massivstoff bildenden Reaktionsgemischen aus mindestens zwei fliessfähigen Komponenten, bestehend aus einem Düsengehäuse mit darin geführter Düsennadel, der einerseits eine Zwangssteuerung zugeordnet ist und die andererseits mit einer Düsenöffnung zusammenwirkt, wobei eine Zuleitung vor der Düsenöffnung mündet und eine Rückleitung vorgesehen ist, und wobei die Düsennadel in ihrer Schliessstellung die Zuleitung und die Rückleitung über einen Verbindungskanal miteinander verbindet.

Die eingangs beschriebene, aus der DE-B-23 64 501 bekannte Einspritzdüse hat sich vom Prinzip her bewährt, weil in ihrer praktischen Ausführungsform die Spitze der Düsennadel als Zapfen ausgebildet ist, dessen Länge auf die Anordnung des Verbindungskanals (Ringnut) sowie auf die Lage der Ausmündung der Rücklaufleitung derart abgestimmt ist, dass während der Umschaltvorgänge beim Öffnen und Schliessen der Einspritzdüse Düsenöffnung und Ausmündung der Rücklaufleitung nicht gleichzeitig geöffnet sind. Hierdurch wird die sogenannte gespaltene Förderung, d.h. gleichzeitige Förderung in die Mischkammer und im Kreislauf, mit ihrer Dosierunggenauigkeit und den sich daraus ergebenden Nachteilen für das Endprodukt unterbunden.

Da der Zapfen mit der Düsenöffnung, in welche er eintaucht, bei den Umschaltvorgängen abdichtend zusammenwirken muss, sind hohe Fertigungsgenauigkeiten erforderlich. Weil beim Härten der Düsennadeln, insbesondere am Übergang zum Zapfen, Verzug durch Wärmespannungen auftreten kann, sind die erforderlichen Passgenauigkeiten bei Düsennadeln mit Zapfen unterhalb 0,8 mm Durchmesser nicht mehr einzuhalten.

Da der Trend zu Mischköpfen für die Fertigung von Kleinteilen geht, müssen zur Herabsetzung der Durchsatzleistungen Einspritzdüsen mit kleineren Düsenöffnungen, d.h. auch solchen unter 0,8 mm Durchmesser, verwendet werden, um ausreichende Vermischung sicherzustellen. Dies ist aber aus den dargelegten Gründen mit Einspritzdüsen, deren Düsennadeln mit einem Zapfen versehen sind, nicht möglich.

Es gilt die Aufgabe zu lösen, die eingangs beschriebene Einspritzdüse so zu verbessern, dass deren Düsenöffnung wesentlich kleiner als bisher gestaltet werden kann, wobei trotzdem sichergestellt ist, dass die geförderte Komponente während der Umschaltvorgänge entweder völlig der Mischkammer zugeführt wird oder völlig in den Rücklauf geht.

Die Lösung besteht darin, dass die Düsennadel unterteilt ist in einen Nadelkern und in eine diesen umgebende und auf diesem geführte Nadelhülse, wobei der Nadelkern mit der Düsenöffnung zusammenwirkt und zapfenlos gestaltet ist, und wobei die Nadelhülse mit dem Verbindungskanal versehen ist, und dass die Zwangssteuerung derart ausgebildet ist, dass beim Umschalten von Einspritzen auf Rücklauf der Nadelkern sich früher in der Schliessstellung befindet als die Nadelhülse in der Rücklaufstellung und dass beim Umschalten von Rücklauf auf Einspritzen die Nadelhülse die Unterbrechungsstellung einnimmt, bevor der Nadelkern die Öffnungsstellung einnimmt.

Dadurch wird bewirkt, dass zum Vermeiden «gespaltener Förderung» auf den Zapfen an der Düsennadel verzichtet werden kann, indem die Funktionen des Öffnens und Schliessens der Düsenöffnung dem Nadelkern und die Funktionen der Freigabe und der Unterbrechung des Rücklaufs der Nadelhülse zugeordnet sind. D.h., die Düsenöffnung kann kleiner gestaltet werden als bisher, weil man zur Vermeidung der «gespaltenen Förderung» nicht mehr eines Zapfens an der Düsennadel bedarf, der auf den Durchmesser der Düsenöffnung abgestimmt sein müsste. Die Herstellung beliebig kleiner Düsenöffnungen ist unproblematisch.

Für die Zwangssteuerung bieten sich mechanische, pneumatische, elektromagnetische und insbesondere hydraulische Lösungen an.

Eine bevorzugte Ausführungsform besteht darin, dass die Nadelhülse einen beidseitig beaufschlagbaren, im Düsengehäuse in einer Hydraulikkammer geführten Hydraulikkolben aufweist, in dem ein dem Nadelkern zugeordneter, einseitig beaufschlagbarer Hydraulikkolben zentrisch geführt ist, der einen mit dem Hydraulikkolben der Nadelhülse zusammenwirkenden Mitnehmeransatz aufweist.

Diese Ausgestaltung erlaubt eine funktionssichere Betriebsweise, indem zum Zwecke des Schliessens der Düsenöffnung beide Kolben druckbeaufschlagt werden, und zwar mit einem Druck, der höher ist als der wirksame Gegendruck der Komponente. Dabei führt der Nadelkern eine Bewegung in die Schliessstellung aus und die Nadelhülse wird in Richtung Düsenöffnung verschoben, bis sie an einem Gehäuseanschlag anliegt und in dieser Stellung die Zuleitung über den Verbindungskanal mit der Auslaufleitung verbindet. Möchte man nun auf «Mischen» umschalten, d.h. die Düsenöffnung freigeben, so wird die Hydraulikkammer entlastet und der Hydraulikkolben der Nadelhülse gegensinnig beaufschlagt, wodurch die Nadelhülse zurückfährt und dabei den Rücklauf unterbricht, bis sie schliesslich an den Mitnehmeransatz am Kolben des Nadelkerns anschlägt und den Nadelkern mitnimmt, wodurch die Düsenöffnung freigegeben wird.

In einer Zeichnung ist die neue Einspritzdüse im Schnitt rein schematisch dargestellt. Es zeigen:

Fig. 1: die Einspritzdüse in Rücklaufstellung,

Fig. 2: die Einspritzdüse im Augenblick des Umschaltens, und

Fig. 3: die Einspritzdüse in Mischstellung.

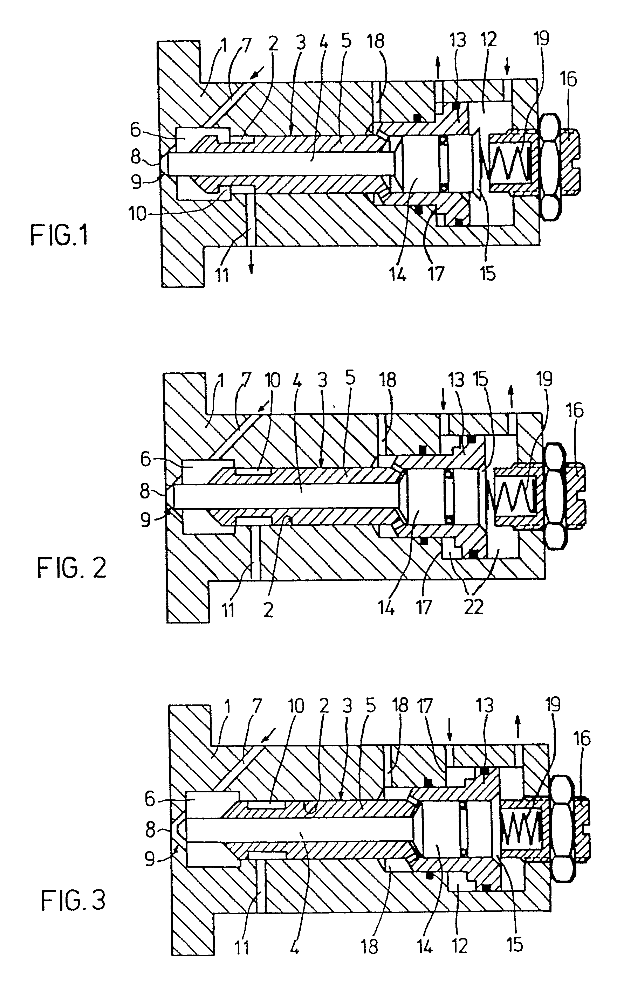

In einem Düsengehäuse 1 ist in einer Gehäusebohrung 2 eine zweiteilige Düsennadel 3 geführt, die aus einem Nadelkern 4 und einer darauf konzentrisch geführten Nadelhülse 5 besteht. Die Gehäusebohrung 2 erweitert sich zu einer Ringnut 6, in die eine Gehäusebohrung 7 mündet, wobei die Ringnut 6 und die Gehäusebohrung 7 die Zuleitung für die Komponente darstellen. Die Ringnut 6 mündet in eine Düsenöffnung 8, die in Fig. 1 durch den auf dem Düsensitz 9 aufsitzenden, zapfenlosen Nadelkern 4 verschlossen ist. Die Nadelhülse 5 weist einen als Ringnut ausgebildeten Verbindungskanal 10 auf. Eine als Rückleitung 11 dienende Gehäusebohrung führt aus dem Gehäuse 1 heraus. Innerhalb des Gehäuses ist eine Hydraulikkammer 12 vorgesehen, in der ein mit der nadelhülse 5 verbundener Hydraulikkolben 13 geführt ist. Dieser ist hohl ausgebildet. Er dient als Führung für den Hydraulikkolben 14 des Nadelkerns 4. Der Hydraulikkolben 14 besitzt einen Mitnehmeransatz 15, an den der Hydraulikkolben 13 anschlagen kann. Die Hubweite des Nadelkerns 4 ist durch eine Stellschraube 16 einjustierbar. Die Vorschubweite der Nadelhülse 5 in Richtung auf die Düsenöffnung 8 ist durch einen Gehäuseanschlag 17 begrenzt, gegen den der Hydraulikkolben 13 anschlagen kann. Schliesslich ist noch eine Ablaufbohrung 18 für Leckageflüssigkeit vorgesehen. Eine Rückstellfeder 19 dient lediglich zum Zuhalten der Düsenöffnung 8 mittels des Nadelkerns 4, wenn die hydraulische Steuerung entlastet ist.

Die Arbeitsweise der Düse ist folgende:

In Fig. 1 ist die Hydraulikkammer 12 derart mit Druck beaufschlagt, dass der Hydraulikkolben 14 den Nadelkern 4 auf den Düsensitz 9 drückt, so dass die Düsenöffnung 8 verschlossen ist. In dieser Stellung liegt auch die Nadelhülse 5 gegen den Gehäuseanschlag 17 an, wodurch der Verbindungskanal 10 die aus Ringnut 6 und Gehäusebohrung 7 bestehende Zuleitung mit der Rückleitung 11 verbindet.

Wird die Einspritzdüse nun auf «Mischen» umgeschaltet, so nehmen der Nadelkern 4 und die Nadelhülse 5 kurzfristig die in Fig. 2 gezeigte Stellung ein. Dies geschieht dadurch, dass die Hydraulikkammer 12 in jenem Sinne beaufschlagt wird, dass die Nadelhülse 5 zurückgeschoben wird. Dadurch wird der Verbindungskanal 10 in die Gehäusebohrung 2 zurückgefahren und unterbricht so die Verbindung zwischen Zuleitung 6, 7 und Rückleitung 11.

Bei der Rückwärtsbewegung der Nadelhülse 5 schlägt deren Kolben 13 gegen den Mitnehmeransatz 15 des Kolbens 14 an, wodurch der damit verbundene Nadelkern 4 vom Düsensitz 9 abgehoben wird und die Düsenöffnung 8 freigibt. Die Komponente kann nun in die Mischkammer einströmen. Diese Stellung ist in Fig. 3 dargestellt.

## Patentansprüche

1. Einspritzdüse für Mischköpfe zur Herstellung von Schaumstoff oder Massivstoff bildenden Reaktionsgemischen aus mindestens zwei fliessfähigen Komponenten, bestehend aus einem Düsengehäuse (1) mit darin geführter Düsennadel (3), der einerseits eine Zwangssteuerung (12, 13, 14, 15, 16, 17) zugeordnet ist und die andererseits mit einer Düsenöffnung (8) zusammenwirkt, wobei eine Zuleitung (6, 7) vor der Düsenöffnung (8) endet und eine Rückleitung (11) vorgesehen ist, und wobei die Düsennadel (3) in ihrer Schliessstellung die Zuleitung (6, 7) und die Rückleitung (11) über einen Verbindungskanal (10) miteinander verbindet, dadurch gekennzeichnet, dass die Düsennadel (3) unterteilt ist in einen Nadelkern (4) und in eine diesen umgebende und auf diesem geführte Nadelhülse (5), wobei der Nadelkern (4) mit der Düsenöffnung (8) zusammenwirkt und zapfenlos gestaltet ist und wobei die Nadelhülse (5) mit dem Verbindungskanal (10) versehen ist; und dass die Zwangssteuerung (12 bis 17) derart ausgebildet ist, dass beim Umschalten von Einspritzen auf Rücklauf der Nadelkern (4) sich früher in der Schliessstellung befindet als die Nadelhülse (5) in der Rücklaufstellung und beim Umschalten von Rücklauf auf Einspritzen die Nadelhülse (5) die Unterbrechungsstellung einnimmt, bevor der Nadelkern (4) die Öffnungsstellung bezieht.

2. Einspritzdüse nach Anspruch 1, dadurch gekennzeichnet, dass die Nadelhülse (5) einen beidseitig beaufschlagbaren, im Düsengehäuse (1) in einer Hydraulikkammer (12) geführten Hydraulikkolben (13) aufweist, in dem ein dem Nadelkern (4) zugeordneter, einseitig beaufschlagbarer Hydraulikkolben (14) zentrisch geführt ist, der einen mit dem Hydraulikkolben (13) der Nadelhülse (5) zusammenwirkenden Mitnehmeransatz (15) aufweist.

## Revendications

1. Buse d'injection pour têtes mélangeuses pour la fabrication de mélanges de réaction en au moins deux composants fluides formant une matière cellulaire ou une matière pleine, et constituée par un boîtier de buse (1) ayant une aiguille de buse (3) guidée à l'intérieur de celui-ci et qui, d'une part, est associée à une commande forcée (12, 13, 14, 15, 16, 17) et qui d'autre part, coopère avec un orifice de buse (8), une conduite d'alimentation (6,7) se terminant alors avant l'orifice de buse (8) et une conduite de retour (11) étant prévue, tandis que l'aiguille de buse (3) réunit l'une à l'autre dans sa position de fermeture la conduite d'alimentation (6, 7) et la conduite de retour (11) par l'intermédiaire d'un canal de liaison (10), buse caractérisée en ce que l'aiguille de buse (3) est subdivisée en un noyau (4) et en une douille (5) entourant celui-ci et placée dessus, le noyau d'aiguille (4) coopérant avec l'orifice de buse (8) et étant formé sans pivot et la douille d'aiguille (5) étant munie du canal de liaison (10); et en ce que la commande forcée (12-17) est conformée de telle manière que, lors du passage de l'injection au reflux, le noyau d'aiguille (4) se trouve plus tôt dans la position de fermeture que la douille d'aiguille (5) dans la position de reflux et que, lors du passage du reflux à l'injection, la douille d'aiguille (5) prenne la position d'interruption avant que le noyau d'aiguille (4) occupe la position d'ouverture.

2. Buse de pulvérisation selon la revendication 1, caractérisée en ce que la douille d'aiguille (5) présente un piston hydraulique (13) qu'on peut alimenter des deux côtés et qui est guidé dans le boîtier de buse (1) dans une chambre hydraulique (12), et dans lequel est placé centralement un piston hydraulique (14) associé au noyau d'aiguille (4) et qu'on peut alimenter d'un seul côté, et qui comporte un élément d'entraînement (15) coopérant avec le piston hydraulique (13) de la douille d'aiguille (5).

## Claims

1. An injection nozzle for mixer heads for the production of foam-forming or solid-forming reaction mixtures from at least two flowable components, consisting of a nozzle housing (1) with a nozzle needle (3) guided in it which, on the one hand, is provided with a positive control (12, 13, 14, 15, 16, 17) and, on the other hand, co-operates with a nozzle opening (8), wherein a feed pipe (6, 7) ends upstream of the nozzle opening (8) and a return pipe (11) is provided and wherein the nozzle needle (3) in its closed position connects the feed pipe (6, 7) and the return pipe (11) to each other via a connecting channel (10), characterised in that the nozzle needle (3) is divided into a needle core (4) and a needle sleeve (5) which surrounds the needle core and is guided on it, wherein the needle core (4) co-operates with nozzle opening (8) and is pin-less in design and wherein the needle sleeve (5) is provided with the connecting channel (10); and in that the positive control (12 to 17) is constructed in such a way that when switching over from injection to return, the needle core (4) is located in the closed position sooner than the needle sleeve (5) in the return position, and when switching over from return to injection, the needle sleeve (5) adopts the interruption position before the needle core (4) occupies the open position.

2. An injection nozzle according to claim 1, characterised in that the needle sleeve (5) has a hydraulic piston (13) which can be charged at both ends and is guided in a hydraulic chamber (12) in the nozzle housing (1) and in which a hydraulic piston (14), which is connected to the needle core (4), can be charged at one end and has a driver attachment (15) co-operating with the hydraulic piston (13) of the needle sleeve (5), and is centrally guided.

FIG.1

FIG. 2

FIG.3